# EUROPÄISCHE PATENTSCHRIFT

(11) **EP 2 560 770 B1**
(45) Veröffentlichungstag und Bekanntmachung des Hinweises auf die Patenterteilung: **18.03.2015**
(21) Anmeldenummer: 11701225.2
(22) Anmeldetag: 18.01.2011
(51) Int. Cl.: B21B 1/36, B21B 3/02, B21B 13/14, B21B 45/02, F16C 13/00, B21B 27/05

(54) **BANDWALZWERK ZUM KALTWALZEN EINER METALLBAHN MIT EINEM QUETSCHWERK**
STRIP ROLLING MILL FOR COLD ROLLING A METALLIC STRIO WITH A SQUEEZING UNIT
LAMINOIR A FEUILLARDS POUR LAMINER A FROID UNE BANDE METALLIQUE AVEC UN MECANISME DE COMPRESSION

(30) Priorität: 20.04.2010 DE 102010027971
(43) Veröffentlichungstag der Anmeldung: 27.02.2013
(73) Patentinhaber: Voith Patent GmbH, 89520 Heidenheim (DE)
(72) Erfinder: SCHNYDER, Eugen, 5622 Waltenschwil (CH); DELL'AVA, Marco, 8604 Volketswil (CH)
(86) Internationale Anmeldenummer: PCT/EP2011/050578
(87) Internationale Veröffentlichungsnummer: WO 2011/131377

(56) Entgegenhaltungen:
- EP-A1- 1 394 424
- US-A- 3 802 044
- US-A- 4 324 122
- US-A- 5 813 959

## Beschreibung

Die Erfindung betrifft ein Bandwalzwerk zum Kaltwalzen einer Metallbahn, insbesondere einer Edelstahlbahn, mit einem Vielrollenwalzgerüst und einem Quetschwerk mit einer oberen Walze und einer unteren Walze, zwischen denen ein Quetschspalt zum Durchführen einer Metallbahn ausgebildet ist, wobei mindestens eine der Walzen einen umlaufenden Mantel und ein feststehendes Joch aufweist, das den Mantel axial durchsetzt, wobei zwischen dem Joch und dem Mantel (9) eine Andrückeinrichtung angeordnet ist, die den Mantel in einer Radialrichtung mit einer Andruckkraft nach außen belastet.

Beim Kaltwalzen von Metallbahnen, insbesondere von Edelstahlbahnen, wird die Metallbahn zwischen zwei Wickelstationen z.B. in einem Vielrollenwalzgerüst mit Druck beaufschlagt, so dass eine Reduzierung der Dicke der Metallbahn erfolgt. Ein derartiges Vielrollenwalzgerüst ist beispielsweise aus EP 0 693 328 A1 bekannt.

Die Metallbahn wird dabei von einer Wickelstation abgewickelt, durchläuft den Pressspalt im Vielrollenwalzgerüst und wird auf der anderen Wickelstation aufgewickelt. Kurz bevor die Metallbahn vollständig abgewickelt ist, wird angehalten und der Pressspalt enger gestellt. Anschließend durchläuft die Metallbahn den Pressspalt in entgegengesetzter Richtung. Die beiden Wickelstationen tauschen dabei ihre Aufgaben.

Im eigentlichen Walzbereich, also im Bereich des Pressspalts, ist ein massives Kühlen und Schmieren der Metallbahn erforderlich. Zum Kühlen und Schmieren wird ein Öl verwendet, das auf die Metallbahn vor dem Pressspalt aufgebracht wird. Zusätzlich oder alternativ kann Öl auch auf die Presswalzen des Vielrollenwalzgerüsts aufgebracht werden.

Vor dem Aufwickeln muss die Metallbahn vom Öl gereinigt werden, da das Öl zu Schwierigkeiten beim Aufwickeln führen kann (z.B. seitliches Teleskopieren). Auch nachfolgende Reinigungsprozesse werden durch das Öl auf der Metallbahn erschwert. Zum Entfernen des Öls ist zwischen dem Vielrollenwalzgerüst und den Wickelstationen jeweils eine Ölabstreifzone vorgesehen. Häufig wird dabei zunächst eine Vorreinigung mit Hilfe einer Lippe vorgenommen, die das Öl von der Oberfläche des Metallbands abstreift. Eine gründlichere Reinigung erfolgt mit Hilfe eines Quetschwerks, das eine obere Walze und eine untere Walze aufweist. Die Walzen bilden einen Quetschspalt, durch den die Metallbahn geführt wird und mit einem Druck beaufschlagt wird. Dadurch wird ein auf einer Oberfläche der Metallbahn befindlicher Ölfilm abgequetscht.

Ein Walzwerk mit einem Vielrollenwalzgerüst und einem Quetschwerk gemäß dem Oberbegriff des Anspruchs 1 zeigt beispielsweise die US 4 324 122 A. Eine möglicherweise als Quetschwalze einsetzbare Walze mit einer weitgehenden Anpassmöglichkeit des Liniendruckprofils offenbart die US 5 813 959 A.

Gegebenenfalls können im Anschluss an das Quetschwerk noch weitere dünne Stahlwalzen angeordnet sein, die zum weiteren Entfernen des Öls dienen.

Damit im Quetschwerk Öl entfernt werden kann, ist es erforderlich, die Metallbahn im Quetschspalt mit einem Druck zu beaufschlagen. Wenn die Anpresskräfte zu gering sind, kann es insbesondere bei höheren Arbeitsgeschwindigkeiten zu einem Aufschwimmen der Walzen kommen, so dass Öl durch den Quetschspalt gelangt. Höhere Anpresskräfte führen jedoch insbesondere bei sich ändernden Bahnbreiten schnell zu einem Überpressen der Bahnkanten, die dadurch einlaufen. Das führt dazu, dass, z.B. bei reduzierter Bahnbreite, im Bereich der Einlaufspuren nahe den Bahnkanten Öl durch den Quetschspalt mitgeführt werden kann.

Um ein Überpressen der Bahnkanten zu verhindern, ist es bekannt, die Walzen des Quetschwerks bombiert auszuführen, also mit einer gewissen Balligkeit zu versehen. Über einen Zeitraum von wenigen Wochen bis ein paar Monaten lassen sich damit befriedigende Ergebnisse erzielen. Allerdings verschleißen die Walzen relativ schnell, so dass relativ häufig ein Austausch der Walzen erfolgen muss.

Der Erfindung liegt nun die Aufgabe zugrunde, Standzeiten zu verlängern.

Ein Bandwalzwerk zum kattwalzen einer Metallbahn gemäß der Erfindung ist im Anspruch 1 definiert.

Mindestens eine der Walzen des Quetschwerks ist also als innengestützte Walze ausgebildet, wobei ein Mantel um ein feststehendes Joch rotiert. Dabei kann die obere oder die untere Walze derartig ausgestaltet sein, während die jeweils andere Walze als herkömmliche Stahlwalze ausgebildet ist. Es ist auch denkbar, sowohl die obere als auch die untere Walze als innengestützte Walze mit einem umlaufenden Mantel auszubilden. Die Andrückeinrichtung ist zwischen dem Joch und dem Mantel angeordnet und drückt den Mantel im Bereich des Quetschspalts radial nach außen. Mit Hilfe der Andrückeinrichtung wird also die gewünschte Anpresskraft eingestellt. Dabei kann durch die über die Walzenbreite variable Andruckkraft eine Wirkbreitenverstellung bzw. eine Zonensteuerung erfolgen. Die Breite des Quetschspalts kann dadurch auf die jeweilige Breite der Metallbahn eingestellt werden, wobei ein Überpressen der Bahnkanten durch eine entsprechende Einstellung verhindert werden kann. Gleichzeitig wird dafür gesorgt, dass über die gesamte Bahnbreite im Quetschspalt eine ausreichende Anpresskraft auf die Metallbahn ausgeübt wird, so dass ein gutes Abquetschen des Öls gewährleistet ist. Eine Restfeuchtigkeit auf dem Metallband wird dabei minimiert. Gleichzeitig kann die Metallbahn mit höheren Bahngeschwindigkeiten betrieben werden. Durch das Verhindern von Überpressung ergeben sich dabei auch verlängerte Standzeiten und bessere Oberflächen des Metallbands. Die Erfindung erreicht somit, den Abquetscheffekt zu verbessern, Schäden am Band zu verringern und Geschwindigkeitssteigerungen zu ermöglichen. Insgesamt wird damit die Produktivität des Gesamtprozesses verbessert.

Die Walze weist offene Führungslager auf. Die Führungslager führen den Walzenmantel auf dem feststehenden Joch. Bei einer offenen Ausbildung der Führungslager können diese einfacher aufgebaut sein und insbesondere mit geringerer Reibung arbeiten. Dies ist insbesondere dann vorteilhaft, wenn die Andrückeinrichtung mit einem Öl betreibbar ist, das dem Öl entspricht, das im Pressspalt des Vielrollenwalzgerüsts auf die Bahn gebracht wird. Dadurch ergibt sich ein relativ einfacher Aufbau.

Vorzugsweise weist die Andrückeinrichtung hydrostatische oder hydrodynamische Stützquellen und/oder eine Rollenabstützung und/oder Luftlager und/oder mindestens einen Öldruckraum auf. Durch eine derartige Ausbildung ist eine Zonensteuerung bzw. Wirkbreitenverstellung relativ einfach und genau möglich. Die Anpresskräfte in Bahnquerrichtung, also über die Walzenbreite, können dann relativ genau eingestellt werden. Gewünschte Kraftprofile sind dann relativ einfach realisierbar, wodurch sichergestellt werden kann, dass über die gesamte Walzenbreite im Quetschspalt ein ausreichender Druck auf das Metallband ausgeübt wird, so dass ein gutes Abquetschen des Öls erreicht wird.

Vorzugsweise ist ein Außendurchmesser des Mantels kleiner als 1000 mm. Durch einen kleinen Außendurchmesser können gute Abquetschergebnisse erzielt werden. Durch die Andrückeinrichtung ist es dabei möglich, sehr kleine Durchmesser zu verwenden, ohne dass dies zu einer ungleichmäßigen Anpressung im Quetschspalt führt. Eine fehlende Steifigkeit der Walze aufgrund des geringen Durchmessers wird durch die variable Einstellung der Andruckkraft über die Walzenbreite ausgeglichen.

Vorzugsweise weist der Mantel ein metallisches Material, insbesondere Bronze, auf. Ein metallisches Material ist relativ widerstandsfähig gegen abrasive Belastung, wobei gleichzeitig eine gewisse Elastizität erhalten werden kann. Insbesondere bei Bronze, das ein relativ weiches Metall ist, kann dabei ein Verkratzen der Oberfläche der Metallbahn verhindert werden. Gleichzeitig können dabei relativ hohe Anpresskräfte auf die Metallbahn ausgeübt werden.

In einer anderen bevorzugten Ausführungsform ist der Mantel als Faserverbundrohr mit einer Komposit- oder Gummibeschichtung ausgebildet. Die Ausbildung des Mantels als Faserverbundrohr ist häufig kostengünstiger als die Verwendung eines metallischen Materials. Gleichzeitig kann damit das Gewicht des Mantels reduziert werden, was die Handhabung insbesondere im Falle eines Austauschs des Mantels vereinfacht. Durch eine Komposit- oder Gummibeschichtung kann dabei erreicht werden, dass eine schonende Behandlung der Oberfläche der Metallbahn und gleichzeitig eine gute Ölaufnahme erfolgt.

In einer weiteren vorteilhaften Ausgestaltung ist der Mantel als Vollgummimantel oder als Gummimantel mit Verstärkung ausgebildet. Der Mantel weist dadurch eine relativ hohe Elastizität auf, so dass in Axialrichtung, also über die Walzenbreite, relativ unterschiedliche Andruckkräfte eingestellt werden können.

In einer weiteren bevorzugten Ausführungsform ist der Mantel als Elastomer- oder Polymermantel ausgebildet und weist insbesondere eine Verstärkung auf. Hinsichtlich ihrer Elastizität lassen sich derartige Mäntel relativ genau einstellen. Gleichzeitig sind sie relativ robust gegen Umwelteinflüsse und relativ leicht.

Vorzugsweise weist die Walze eine Selbstanstellung auf. Dies bedeutet, dass der Mantel der Walze gegenüber dem feststehenden Joch derart bewegt werden kann, dass der Quetschspalt geöffnet wird. Dies ist insbesondere für das Einfädeln eines neuen Metallbandes erforderlich. Bei Walzen ohne Selbstanstellung erfolgt die erforderliche Verschiebung beispielsweise mit Hilfe von Anstellzylindern, die in einem Walzengerüst angeordnet sind.

Alternativ ist bevorzugt, dass der umlaufende Mantel konzentrisch zum Joch geführt ist und dass das Joch über externe Zylinder angestellt wird. Diese Ausführungsform verfügt über keinen inneren Eigenhub, wodurch der Walzenaußendurchmesser minimiert und dadurch die Abquetschwirkung nochmals verstärkt werden kann. Die Andrückeinrichtung ist in dieser Ausführungsform für eine Durchbiegungseinstellung verantwortlich. Der Spalt zum Einfädeln wird durch die Verstellung externer Zylinder hergestellt.

Mit Vorteil ist der Mantel getrennt vom Kern der Walze ausbaubar. Wenn nur das leichte und gut handhabbare Verschleissteil, der Mantel, aus der Maschine ausbaubar ist, kann das Joch der Walze in der Maschine verbleiben. So kann z. B. die Hydraulikversorgung des Walzensystems immer gekoppelt bleiben, und der Mantel-Wechselvorgang ohne aufwändige Hilfsmittel sehr effizient und sicher gestaltet werden.

Es ist von besonderem Vorteil, wenn die Walzen in eine in die Maschine einschiebbare Kassette angeordnet sind. Diese Ausführungsform erlaubt die gesamte detaillierte Integration der Bauteile außerhalb der Maschine vorzunehmen und das gesamte System gemeinsam in die Maschine zu schieben. Dabei können die hydraulischen Anschlüsse automatisch gekoppelt werden. Dadurch lassen sich die Stillstandszeiten der Maschine minimieren und der eigentliche Wechselvorgang kann nach Bedarf einfach automatisiert werden.

Die Erfindung wird im Folgenden anhand bevorzugter Ausführungsbeispiele in Verbindung mit der Zeichnung näher beschrieben. Hierin zeigen:
- Fig. 1: einen schematischen Aufbau eines Bandwalzwerks,
- Fig. 2: einen schematischen Aufbau eines Quetschwerks,
- Fig. 3: einen Querschnitt des Quetschwerks gemäß Fig. 2 und
- Fig. 4: eine bevorzugte Ausgestaltung einer Walze des Quetschwerks.

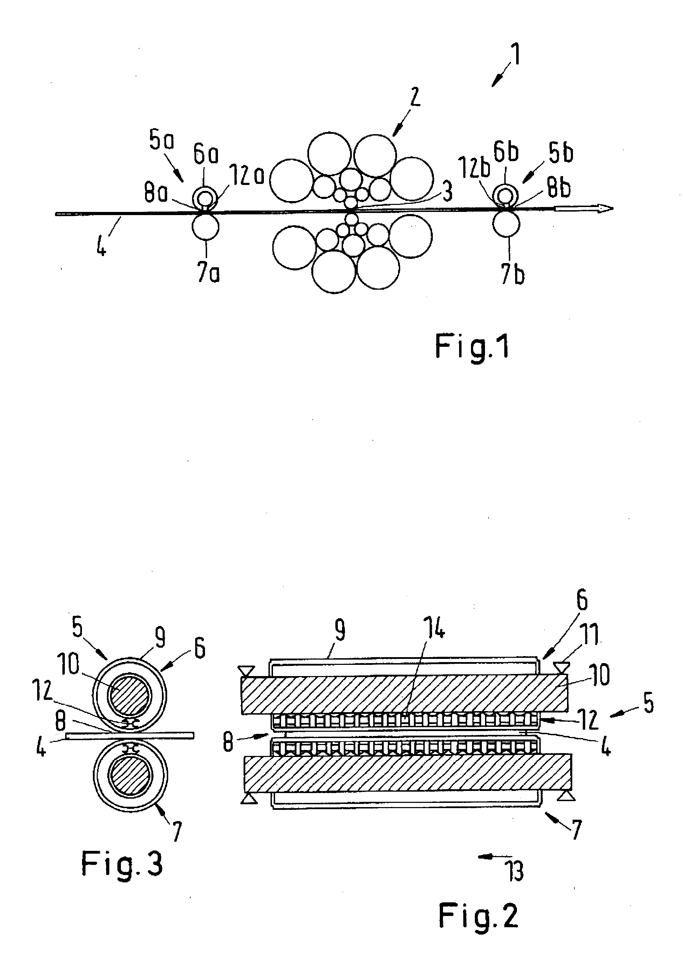

In Fig. 1 ist schematisch ein Bandwalzwerk 1 dargestellt mit einem Vielrollenwalzengerüst 2, das einen Pressspalt 3 aufweist, durch den eine Metallbahn 4 geführt ist. Die Metallbahn ist in abwechselnden Richtungen durch den Pressspalt 3 führbar, wobei vor jeder Umkehrung der Richtung der Pressspalt 3 enger gestellt wird. Dadurch erfolgt eine Verringerung der Dicke der Metallbahn 4. Die Metallbahn 4 ist bei diesem Ausführungsbeispiel eine Edelstahlbahn.

Zur Kühlung der Metallbahn 4 wird vor dem Pressspalt 3 (auch gemäß der Erfindung) über nicht dargestellte Aufbringeinrichtungen Öl aufgebracht. An beiden Seiten des Pressspalts 3 ist zum Entfernen des Öls jeweils ein Quetschwerk 5a, 5b angeordnet, die gleich ausgebildet sind. Das Quetschwerk 5a, 5b weist eine obere Walze 6a, 6b und eine untere Walze 7a, 7b auf, wobei zwischen den oberen Walzen 6a, 6b und den unteren Walzen 7a, 7b ein Quetschspalt 8a, 8b ausgebildet ist, durch den die Metallbahn 4 geführt ist. Auf den von dem Pressspalt 3 abgewandten Seiten der Quetschwerke 5a, 5b ist jeweils eine Wickelstation angeordnet, die jedoch nicht dargestellt ist. Zusätzlich zu den Quetschwerken können auch noch weitere Ölabstreifvorrichtungen vorgesehen sein.

Der Aufbau der Quetschwerke 5a, 5b wird im Folgenden anhand der Fig. 2 und 3 näher erläutert. Dabei stellt Fig. 3 eine Seitenansicht der Fig. 2 dar.

In Fig. 2 ist das Quetschwerk 5 in geschnittener Darstellung gezeigt. Sowohl die obere Walze 6 als auch die untere Walze 7 sind dabei als innengestützte Walzen ausgebildet. Bei der Darstellung in Fig. 1 ist nur die obere Walze 6 als innengestützte Walze ausgebildet, während die untere Walze 7 eine herkömmliche Stahlwalze ist.

Der Aufbau der innengestützten Walze wird im Folgenden anhand der oberen Walze 6 erläutert.

Die Walze 6 weist einen umlaufenden Mantel 9 auf, der rotierbar um ein feststehendes Joch 10 gelagert ist. Das Joch 10 ist über Lagerstellen 11 in einem nicht dargestellten Walzengestell 11 gelagert, wobei die Lagerstellen 11 beispielsweise über Andruckzylinder belastet werden können, um eine Anpresskraft im Quetschspalt 8 zu erhöhen. Über derartige Andruckzylinder ist es auch möglich, die Walzen 6, 7 voneinander zu entfernen und den Quetschspalt 8 zu öffnen, so dass ein Einfädeln eines neuen Metallbandendes relativ problemlos möglich ist.

Zwischen dem Mantel 9 und dem Joch 10 ist eine Andrückeinrichtung 12 angeordnet, die bei diesem Ausführungsbeispiel eine Vielzahl hydrostatischer oder hydrodynamischer Stützquellen 14 aufweist. Die Stützquellen 14 sind dabei über eine Walzenbreite, deren Verlauf durch einen Pfeil 13 symbolisiert wird, gleichmäßig verteilt. Dadurch ist eine variable Einstellung der Anpresskraft über die Walzenbreite 13 möglich. Die Walzenbreite 13 erstreckt sich in Richtung einer Metallbahnbreite bzw. in Axialrichtung der Walze.

Durch entsprechende Beaufschlagung der Stützquellen 14 kann die Anpresskraft im Quetschspalt 8 über die Walzenbreite 13 eingestellt werden. Dadurch kann ein gewünschtes Druckprofil eingestellt werden. Insbesondere ist dabei eine Zonensteuerung und Wirkbreitenverstellung möglich. Die Wirkbreite des Quetschspalts 8 kann dabei auf die Breite der jeweiligen Metallbahn 4 eingestellt werden. Ein Überpressen von Bahnkanten wird damit verhindert. Der auf die Metallbahn ausgeübte Druck im Quetschspalt lässt sich durch die variable Einstellung der Anpresskräfte sehr konstant halten, so dass über die gesamte Bahnbreite ein sicheres Abquetschen des Öls gewährleistet werden kann.

Die untere Walze 7 ist entsprechend der oberen Walze 6 ausgebildet. Auf eine detaillierte Beschreibung der unteren Walze 7 wird daher verzichtet. Die Andrückeinrichtung 12 ist jeweils auf der dem Quetschspalt zugewandten Seite des Jochs 10 angeordnet, so dass eine direkte Beaufschlagung des Mantels 9 durch die Andrückeinrichtung 12 im Wirkbereich des Quetschspalts 8 erfolgt.

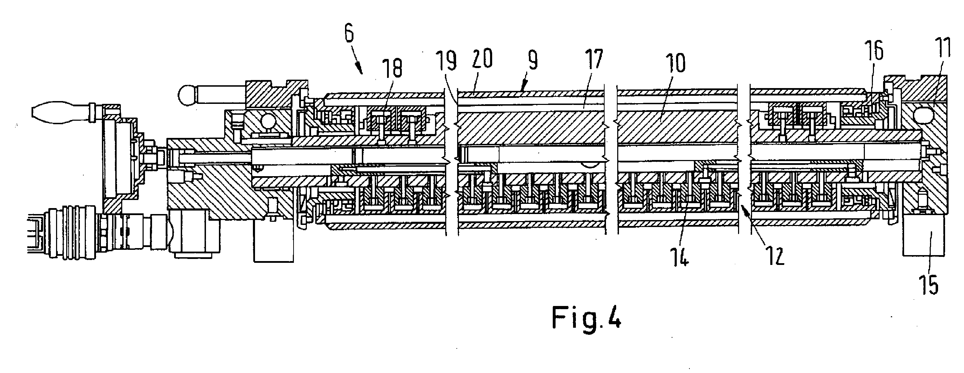

In Fig. 4 ist eine bevorzugte Ausführungsform einer innengestützten Walze dargestellt, wobei es sich bei diesem Beispiel um die obere Walze 6 handelt. Das feststehende Joch 10 ist dabei über die Lagerstellen 11 in einem Gestell 15 gelagert. Der Mantel 9 ist über offene Führungslager 16 drehbar am Joch 10 befestigt. Offenes Führungslager bedeutet dabei, dass gemäß der Erfindung ein Flüssigkeitsaustausch zwischen einem Innenraum 17 des Mantels 9 nach außen erfolgen kann.

Im Joch 10 sind Stützquellen 14 der Andrückeinrichtung 12 gelagert. Die Stützquellen 14 sind dabei als hydrodynamische Stützquellen ausgebildet und werden durch eine Hohlleitung, die im Joch 10 axial verläuft, mit Öl versorgt. Dabei ist eine individuelle Versorgung der Stützquellen 14 möglich, so dass über die Walzenbreite eine variable Einstellung der Anpresskraft möglich ist, mit der der Mantel 9 von den Stützquellen 14 beaufschlagt wird. Die Andrückeinrichtung 12 ist dabei nur an einer Seite des Jochs 10 angeordnet und zwar an der Seite, die zur Ausbildung des Quetschspalts dient. In Randbereichen des Mantels 9 sind Sekundärstützquellen 18 angeordnet, die zur Einstellung der radialen Lage des Mantels 9 gegenüber dem Joch 10 dienen. Dadurch ist eine Selbsteinstellung der Walze 6 möglich.

Der Mantel 9 ist bei dem in Fig. 4 dargestellten Ausführungsbeispiel als Rohr 19 mit einer außen liegenden Beschichtung 20 ausgebildet. Das Rohr 19 ist beispielsweise als Faserverbundrohr ausgebildet und die Beschichtung als Kompositbeschichtung. Auch andere Kombinationen sind denkbar, um eine Anpassung der Walze an die jeweiligen Anforderungen zu ermöglichen.

Es ist auch denkbar, den Mantel 9 austauschbar zu gestalten, so dass auch eine nachträgliche Anpassung der Walze 6 möglich ist. Dabei ist auch eine Ausführungsform denkbar, bei der nur der Mantel 9 mit gewissen Anbauteilen ausgebaut wird, der verbleibende Kern der Walze (10, 12, 14, 16 etc.) dagegen in der Maschine verbleibt. Durch die Verwendung des gleichen Öls als Betriebsmedium, das im Pressspalt 3 zum Kühlen der Metallbahn 4 eingesetzt wird, ist eine Abdichtung des Innenraums 17 nicht erforderlich. Das Öl kann dadurch seitlich außerhalb des Metallbandes in einem Sammelbehälter gesammelt werden, in dem auch das von der Metallbahn abgequetschte Öl gesammelt wird.

In Fig. 4 ist nur eine obere Walze dargestellt. Es ist auch denkbar, die untere Walze entsprechend auszugestalten, wobei das Quetschwerk durch zwei derartige Walzen gebildet ist. Ebenso ist es möglich, nur die untere Walze als innengestützte Walze auszubilden, während als obere Walze eine herkömmliche Stahlwalze eingesetzt wird.

Es ist auch denkbar, die Walzen 6 in einer Kassette vorzumontieren und in die Maschine einzuschieben.

## Patentansprüche

1. Bandwalzwerk zum Kaltwalzen einer Metallbahn, insbesondere einer Edelstahlbahn, mit einem Vielrollenwalzgerüst (2), das einen Presspalt (3) aufweist, und einem Quetschwerk (5a, 5b) mit einer oberen Walze (6a, 6b) und einer unteren Walze (7a, 7b), zwischen denen ein Quetschspalt zum Durchführen einer Metallbahn (4) ausgebildet ist, wobei mindestens eine der Walzen (6, 7) einen umlaufenden Mantel (9) und ein feststehendes Joch (10) aufweist, das den Mantel (9) axial durchsetzt, wobei zwischen dem Joch (10) und dem Mantel (9) eine Andrückeinrichtung (12) angeordnet ist, die den Mantel (9) in einer Radialrichtung mit einer Andruckkraft nach außen belastet,
**dadurch gekennzeichnet, dass**
a) die Andruckkraft über eine Walzenbreite (13) variabel ist,
b) die Walze (6, 7) offene Führungslager (16) aufweist, so dass ein Flüssigkatsaustansch zwischen einem Innenvaum (17) des Mantels (9) nach außen erfolgen kann, und
c) die Andrückeinrichtung (12) mit einem Öl betreibbar ist, das dem Öl entspricht, das im oder vor dem Pressspalt (3) des Vielrollenwalzgerüsts (2) auf die Metallbahn (4) gebracht wird.

2. Bandwalzwerk nach Anspruch 1 oder 2, **dadurch gekennzeichnet, dass** die Andrückeinrichtung (12) hydrostatische oder hydrodynamische Stützquellen und/oder eine Rollenabstützung und/oder Luftlager und/oder mindestens einen Öldruckraum aufweist.

3. Bandwalzwerk nach einem der Ansprüche 1 bis 3, **dadurch gekennzeichnet, dass** ein Außendurchmesser des Mantels (9) kleiner als 1000 mm ist.

4. Bandwalzwerk nach einem der Ansprüche 1 bis 3, **dadurch gekennzeichnet, dass** der Mantel (9) ein metallisches Material, insbesondere Bronze, aufweist.

5. Bandwalzwerk nach einem der Ansprüche 1 bis 3, **dadurch gekennzeichnet, dass** der Mantel (9) als Faserverbundrohr mit einer Komposit- oder Gummibeschichtung ausgebildet ist.

6. Bandwalzwerk nach einem der Ansprüche 1 bis 3, **dadurch gekennzeichnet, dass** der Mantel (9) als Vollgummimantel oder als Gummimantel mit Verstärkung ausgebildet ist.

7. Bandwalzwerk nach einem der Ansprüche 1 bis 3, **dadurch gekennzeichnet, dass** der Mantel (9) als Elastomer- oder Polymermantel ausgebildet ist und insbesondere eine Verstärkung aufweist.

8. Bandwalzwerk nach einem der Ansprüche 1 bis 7, **dadurch gekennzeichnet, dass** die Walze (6, 7) eine Selbstanstellung aufweist.

9. Bandwalzwerk nach einem der Ansprüche 1 bis 7, **dadurch gekennzeichnet, dass** der umlaufende Mantel (9) konzentrisch zum Joch (10) geführt ist und dass das Joch (10) über externe Zylinder angestellt wird.

10. Bandwalzwerk nach einem der Ansprüche 1 bis 9, **dadurch gekennzeichnet, dass** der Mantel (9) getrennt vom Kern der Walze ausbaubar ist.

11. Bandwalzwerk nach einem der Ansprüche 1 bis 10, **dadurch gekennzeichnet, dass** die Walzen (6,7) in eine in die Maschine einschiebbare Kassette angeordnet sind.

## Claims

1. Strip rolling mill for cold rolling a metal strip, in particular a stainless steel strip, having a multi-roll roll stand (2), which has a press nip (3), and a squeezing unit (5a, 5b) having an upper roll (6a, 6b) and a lower roll (7a, 7b), between which a squeezing nip for leading a metal strip (4) through is formed, at least one of the rolls (6, 7) having a revolving shell (9) and a stationary yoke (10) which passes axially through the shell (9), a pressing device (12), which loads the shell (9) outwards with a pressing force in a radial direction, being arranged between the yoke (10) and the shell (9),
**characterized in that**
a) the pressing force is variable over a roll width (13),
b) the roll (6, 7) has open guide bearings (16), so that a liquid exchange can take place between an interior (17) of the shell (9) to the outside, and
c) the pressing device (12) can be operated with an oil which corresponds to the oil which is applied to the metal strip (4) in or before the press nip (3) of the multi-roll roll stand (2).

2. Strip rolling mill according to Claim 1 or 2, **characterized in that** the pressing device (12) has hydrostatic or hydrodynamic supporting elements and/or a roller support and/or air bearings and/or at least one oil pressure chamber.

3. Strip rolling mill according to one of Claims 1 to 3, **characterized in that** an external diameter of the shell (9) is smaller than 1000 mm.

4. Strip rolling mill according to one of Claims 1 to 3, **characterized in that** the shell (9) has a metallic material, in particular bronze.

5. Strip rolling mill according to one of Claims 1 to 3, **characterized in that** the shell (9) is formed as a fibre composite tube with a composite or rubber coating.

6. Strip rolling mill according to one of Claims 1 to 3, **characterized in that** the shell (9) is formed as a solid rubber shell or as a rubber shell with reinforcement.

7. Strip rolling mill according to one of Claims 1 to 3, **characterized in that** the shell (9) is formed as an elastomer or polymer shell and in particular has reinforcement.

8. Strip rolling mill according to one of Claims 1 to 7, **characterized in that** the roll (6, 7) has a self-setting means.

9. Strip rolling mill according to one of Claims 1 to 7, **characterized in that** the revolving shell (9) is guided concentrically with respect to the yoke (10), and **in that** the yoke (10) is thrown on via external cylinders.

10. Strip rolling mill according to one of Claims 1 to 9, **characterized in that** the shell (9) can be removed separately from the core of the roll.

11. Strip rolling mill according to one of Claims 1 to 10, **characterized in that** the rolls (6, 7) are arranged in a cartridge that can be inserted into the machine.

## Revendications

1. Laminoir à feuillards pour laminer à froid une bande métallique, en particulier une bande en acier inoxydable, comprenant un bâti de roulement à plusieurs rouleaux (2), qui présente une fente de pressage (3), et un mécanisme de compression (5a, 5b) avec un cylindre supérieur (6a, 6b) et un cylindre inférieur (7a, 7b), entre lesquels est réalisée une fente de compression pour guider une bande métallique (4), au moins l'un des cylindres (6, 7) présentant une enveloppe périphérique (9) et une armature fixe (10), qui traverse axialement l'enveloppe (9), un dispositif de pressage (12) étant disposé entre l'armature (10) et l'enveloppe (9), lequel sollicite l'enveloppe (9) vers l'extérieur avec une force de pressage dans une direction radiale,
**caractérisé en ce que**
a) la force de pressage est variable sur une largeur du cylindre (13),
b) le cylindre (6, 7) présente des paliers de guidage ouverts (16), de sorte qu'un échange de liquide entre un espace interne (17) de l'enveloppe (9) et l'extérieur puisse avoir lieu et
c) le dispositif de pressage (12) peut fonctionner avec une huile qui correspond à l'huile qui est introduite dans ou devant la fente de pressage (3) du bâti de roulement à plusieurs rouleaux (2) sur la bande métallique (4).

2. Laminoir à feuillards selon la revendication 1 ou 2, **caractérisé en ce que** le dispositif de pressage (12) présente des sources de support hydrostatiques ou hydrodynamiques et/ou un support à rouleaux et/ou un palier pneumatique et/ou au moins un espace de pression d'huile.

3. Laminoir à feuillards selon l'une quelconque des revendications 1 à 3, **caractérisé en ce qu'**un diamètre extérieur de l'enveloppe (9) est inférieur à 1000 mm.

4. Laminoir à feuillards selon l'une quelconque des revendications 1 à 3, **caractérisé en ce que** l'enveloppe (9) présente un matériau métallique, en particulier du bronze.

5. Laminoir à feuillards selon l'une quelconque des revendications 1 à 3, **caractérisé en ce que** l'enveloppe (9) est réalisée sous forme de tube composite fibreux comprenant un revêtement composite ou de caoutchouc.

6. Laminoir à feuillards selon l'une quelconque des revendications 1 à 3, **caractérisé en ce que** l'enveloppe (9) est réalisée sous forme d'enveloppe pleine en caoutchouc ou sous forme d'enveloppe en caoutchouc avec un renforcement.

7. Laminoir à feuillards selon l'une quelconque des revendications 1 à 3, **caractérisé en ce que** l'enveloppe (9) est réalisée sous forme d'enveloppe élastomère ou polymère et présente notamment un renforcement.

8. Laminoir à feuillards selon l'une quelconque des revendications 1 à 7, **caractérisé en ce que** le cylindre (6, 7) présente sa propre inclinaison.

9. Laminoir à feuillards selon l'une quelconque des revendications 1 à 7, **caractérisé en ce que** l'enveloppe périphérique (9) est guidée concentriquement par rapport à l'armature (10) et **en ce que** l'armature (10) est inclinée par le biais de cylindres externes.

10. Laminoir à feuillards selon l'une quelconque des revendications 1 à 9, **caractérisé en ce que** l'enveloppe (9) peut être démontée séparément du noyau du cylindre.

11. Laminoir à feuillards selon l'une quelconque des revendications 1 à 10, **caractérisé en ce que** les cylindres (6, 7) sont disposés dans une cassette pouvant être introduite dans la machine.
